**Europäisches Patentamt**

**European Patent Office**

**Office européen des brevets**

(11) Publication number: **0 161 773**
**B1**

(12) **EUROPEAN PATENT SPECIFICATION**

(45) Date of publication of patent specification: **09.11.88**

(51) Int. Cl.⁴: **C 08 F 2/32**

(21) Application number: **85302274.7**

(22) Date of filing: **01.04.85**

(54) Surfactant system for emulsion polymers.

(30) Priority: **04.04.84 US 596798**

(43) Date of publication of application:
**21.11.85 Bulletin 85/47**

(45) Publication of the grant of the patent:
**09.11.88 Bulletin 88/45**

(84) Designated Contracting States:
**AT BE CH DE FR GB IT LI LU NL SE**

(56) References cited:
**DE-A-2 926 103**
**US-A-4 024 097**

(73) Proprietor: **CALGON CORPORATION**
**Route 60-Campbell's Run Road**
**Robinson Township Pennsylvania 15205 (US)**

(72) Inventor: **Chan, Marie S.**
**1989 Kirkby Drive**
**Library Pennsylvania 15129 (US)**

(74) Representative: **Crampton, Keith John Allen**
**et al**
**D YOUNG & CO 10 Staple Inn**
**London WC1V 7RD (GB)**

Courier Press, Leamington Spa, England.

## Description

Water-soluble polymers can be prepared in several forms. For instance, it is known that water-soluble polymers can be prepared in the dispersed phase of water-in-oil emulsions. This invention concerns a primary surfactant system for water-in-oil emulsions of water-soluble ethylenically unsaturated polymers, a process for producing polymer emulsions and the emulsions so produced.

Water-in-oil emulsions are composed of three components, including: (1) an aqueous phase; (2) a hydrophobic (oil) phase; and (3) a surfactant system.

U.S. Patent Specification US-A-3 826 771 discloses the use of sorbitan monostearate and sorbitan monooleate as water-in-oil emulsifying agents. U.S. Patent Specification US-A-3 278 506 further discloses the use of ethylene oxide condensates of fatty acid amides as emulsifiers. U.S. Patent Specification US-A-3 284 393 suggests the use of hexadecyl sodium phthalate, sorbitan monooleate, sorbitan monostearate, cetyl or stearyl sodium phthalate and metal soaps as oil-in-water emulsifiers, while U.S. Patent Specification US-A-4 024 097 discloses the use of surfactant systems comprising an oil-soluble alkanolamide, such as Witcamide 511, which is commercially available from Witco Chemical Company, and, as coemulsifier(s), one or more unesterified dialkanol fatty amides, quaternized ammonium salts of fatty tertiary amines, salts of fatty tertiary amines, alkali metal salts of fatty acids and alkyl or alkylaryl sulfates or sulfonates.

The novel surfactant system described herein is not disclosed or suggested by the above-cited documents, which most commonly teach the use of so-called low hydrophilic-lipophilic balance (HLB) materials as emulsifying agents, such as those having an HLB value of less than 5.0.

Disadvantages are inherent in the use of many known surfactant systems. For example, emulsions made with known surfactant systems tend to separate over relatively short periods of time. This problem is closely relates to the relatively large particle sizes common to known emulsions. Also, high bulk viscosities keep active polymer concentrations low and contemporary polymer emulsions lack high temperature tolerance. Generally, these difficulties cannot be remedied using known art without diminishing polymer performance. Finally, high oil concentrations of known emulsions keep manufacturing costs high.

Through extensive research, it has now been discovered that a surfactant system comprising an oil-soluble alkanolamide, polyoxyethylene derivatives of sorbitan esters and, optionally, sorbitan monooleate, can be used to cheaply produce water-in-oil emulsions of ethylencially unsaturated polymers that have the following unexpected characteristics; (1) improved settling storage stability; (2) small particle size; (3) low bulk viscosity; (4) improved high-temperature tolerance; (5) low oil content; (6) improved solids loadings; and (7) comparable or improved performance without sacrifice of the above advantages. In contrast with the prior art referred to above, this surfactant system is totally nonionic and requires the use of polyoxyethylene derivatives of sorbitan esters, which commonly have HLB values in the range 9.0 to 11-0.

This invention provides a surfactant system for use in manufacturing water-in-oil emulsions of water-soluble polymers, especially those made from ethylenically unsaturated monomers, comprising 25 to 85 percent by weight of an oil-soluble alkanolamide, 5 to 35 percent by weight of a polyoxyethylene derivative of a sorbitan ester, and 0 to 50 percent by weight of sorbitan monooleate.

Further, this invention provides a water-in-oil emulsion polymerization process comprising forming a water-in-oil emulsion of an aqueous solution of at least one water-soluble ethylenically unsaturated monomer in an inert hydrophobic liquid organic dispersion medium; and polymerizing the monomer or monomers in the dispersion medium to form a polymer emulsion; characterized by using from 0.1 to 15.0 percent by weight, based on the total emulsion, of a surfactant system in accordance with the present invention.

The surfactant system of the invention constitutes an advance in the art of emulsion polymerization. In particular, the oil concentration of the products is reduced, thus decreasing costs. It is generally applicable to processes for the manufacture of nonionic or anionic water-soluble emulsion polymers of ethylenically unsaturated monomers such as acrylamide, methacrylamide, N,N-dimethyl acrylamide, acrylic acid, methacrylic acid, acrylonitrile, vinylsulfonic acid, styrene sulfonic acid, β-carboxy ethyl acrylate and acrylamido methylpropane sulfonic acid, alone or in combination. Also, this novel surfactant system can be used in processes for the manufacture of cationic emulsion polymers, e.g. polymers made from such cationic monomers as N,N-dimethylaminoethyl methacrylate, dimethyldiallyl ammonium chloride (DMDAAC), diethyldiallyl ammonium chloride (DEDAAC), methacryloyloxyethyl trimethylammonium chloride (METAC), methacryloyloxyethyl trimethylammonium methosulfate (METAMS), methacrylamidopropyl trimethylammonium chloride (MAPTAC), acryloyloxyethyl trimethylammonium chloride, acryloyloxyethyl trimethylammonium methosulfate, and quaternized derivatives of N,N-dimethylaminoethyl methacrylate, alone or in combination, or polymers made by combining the above-listed cationic monomers with acrylamide, methacrylamide or N,N-dimethylacrylamide.

The molecular weight of these polymers is critical and must remain high. The preferred molecular weights are greater than or equal to 1,000,000, which corresponds to intrinsic viscosities of at least 10.0 dl/g in a 1.0 $N$ sodium chloride solution at 30°C.

Water-in-oil emulsions are comprised of three components including: (1) a hydrophobic phase; (2) an aqueous phase; and (3) a surfactant system. The hydrophobic phase may make up from 10 to 40 percent by weight of the emulsion. Any inert hydrophobic liquid can be used. The preferred hydrophobic liquids are benzene, xylene, toluene, mineral oils, kerosene, naphthas, petroleums, and blends of aromatic and aliphatic hydrocarbons containing 4 or more carbon atoms. The especially preferred hydrophobic liquids are a narrow fraction of a branch-chain hydrocarbon sold by Witco Chemical Company under the tradename Kensol 61 and a branch-chain isoparafinic hydrocarbon sold by Exxon under the tradename Isopar M.

The aqueous phase makes up from 55 to 85 percent by weight of the emulsion. This phase comprises the desired monomer or monomers dissolved in water. Additionally, the phase may contain an effective amount of a chelating agent, such as a sodium salt of ethylene diamine tetraacetic acid (EDTA) or nitrilotriacetate (NTS). The active polymer concentration may range from 20 to 50 percent by weight of the emulsion.

The surfactant system preferably comprises 70 to 80 percent by weight of the oil-soluble alkanolamide; 10 to 30 percent by weight of the polyoxyethylene derivative of a sorbitan ester; and 0 to 15 percent by weight of sorbitan monooleate. Other surfactants, such as sorbitan monostearate, may be used in combination with the above-listed surfactants.

The surfactant system preferably comprises 1 to 5 percent by weight of the emulsion.

Any oil-soluble alkanolamide is acceptable. The preferred oil-soluble alkanolamides are the alkanol fatty amide surfactants, such as Clintwood LT-10-8-1, which is commercially available from Clintwood Chemical Company. The especially preferred oil-soluble alkanolamide is a partially-esterified N,N-alkanol fatty amide surfactant called Witcamide 511, which is commercially available from Witco Chemical Company. This surfactant is described in the literature as being approximately 50 percent by weight of unesterified N,N-diethanol fatty amide, approximately 40 percent by weight of monoesterified N,N-diethanol fatty amide and some diesterified material, in which the fatty groups on the emulsifier chain are approximately 64 percent oleyl, 33 percent linoleic and 3 percent palmityl.

Any polyoxyethylene derivative of a sorbitan ester is acceptable for use in the surfactant systems of the present invention. The preferred derivatives are polyoxyethylene (4) sorbitan monostearate, which has 4 oxyethylene units per mole of ester, and polyoxyethylene (5) sorbitan monooleate, which has 5 oxyethylene units per mole of ester. These products are available commerically from ICI Americas Incorporated under the registered trade marks Tween 61 and Tween 81, respectively. Similar products are also available from Glyco Chemicals, Inc. under the registered trade marks Glycosperse S-4 and Glycosperse 0.5, respectively.

Optionally, any fatty acid ester of sorbitan can be used in the surfactant systems. The preferred fatty acid esters of sorbitan are sorbitan monooleate, which is commercially available from ICI Americas, Inc. under the registered trade mark Span 80, and from Glyco Chemicals Inc. under the registered trade mark Glycomul O, and sorbitan monostearate, which is commerically available from Glyco Chemicals Inc. under the registered trade mark Glycomul S. The particularly preferred fatty acid ester of sorbitan is sorbitan monooleate.

Emulsion polymers are generally produced by first mixing the surfactant system with the hydrophobic phase. The aqueous phase is then prepared by adding the monomer(s) to water in the desired concentration. Additionally a chelant such as a sodium salt of EDTA may be added to the aqueous solution and the pH of the aqueous phase may be adjusted to 3.0 to 10.0, depending on the monomer(s) used. The aqueous monomer phase is then added to the mix containing the hydrophobic liquid and the surfactant system. The surfactant system enables the aqueous phase, which contains the monomer or monomers to be polymerized, to be emulsified into the hydrophobic phase. Polymerization is then carried out in the presence of a free radical generating catalyst, and the temperature of the reaction mixture is maintained between 5 and 100 °C, preferably between 20 and 50 °C.

## EXAMPLES

The following examples, in which parts are by weight, illustrate the invention in greater detail, but do not in any way limit it.

### Examples 1 to 5

Nonionic emulsion polymers of acrylamide were manufactured. In each of these examples, the aqueous phase comprised 30.0 parts acrylamide, 40.217 parts water, 0.033 part sodium salt EDTA, and 1-75 parts ammonium chloride. The pH of this phase was adjusted to 7.0. 26-0 parts Kensol 61, which made up the hydrophobic phase, and 2.0 parts of the chosen surfactant system were then mixed, and the aqueous phase was added to the oi1/surfactant mixture. Polymerization was initiated using a tertiary butyl hydroperoxide/sodium metabisulfite catalyst system under nitrogen and the temperature of the reaction vessel was maintained in the range 35 to 45 °C. Results are shown in Table I, below. In this Table, the centrifuge test measured the settling stability of the emulsions. 100 g of each polymer emulsion was centrifuged at 1500 RPM for 1 hour, 2000 RPM for 0-5 hour and 3000 RPM for 0.5 hour; then the weight percent of the compacted material was determined. These values are shown as "% Compaction" in Table I.

Reduced viscosities of the polymers were measured at 0.05 g/dl using a 1.0 $N$ sodium chloride solution at 30 °C. These values are shown as "dl/g" in Table I. Viscosities of the emulsions were measured using a Brookfield Model LVT Viscometer and are shown in cps in Table I.

The silica settling test measured the relative polymer dosages required to settle a standard silica suspension to a 5-inch (127-mm) depth in 75 seconds. The standard silica suspension was prepared by adding 150 g of 200-mesh quartz, i.e., that which passed a sieve with O.074 mm opening and 0.053 mm nominal wire diameter, to 200 mls of distilled water, and then diluting the suspension to 790 mls using additional distilled water. The values shown in Table I are ratios of the grams of polymer required for the desired settling rate (5 inches (127 mm) in 75 seconds) over the grams of polymer used in Example 1 (Witcamide/Span 80) to achieve this desired settling rate.

4

TABLE I

| Example No. | Surfactant System | Surfactant System Composition (Weight %) | % Active Polymer | Brookfield Viscosity (cps) | Mean Diameter of Polymer Particles ($\mu$) | Centrifuge Test (% Compaction) | n0.05 1.0 $N$ NaCl (dl/g) | Silica Settling Test (Equivalent Dosage Ratio) |
|---|---|---|---|---|---|---|---|---|
| 1* | Witcamide 511[1]/Span 80[2] | 25/75 | 30.0 | 1850 | 1.65 | 66.6 | 22.0 | 1.0 |
| 2* | Witcamide 511 | 100 | 30.0 | 1275 | 0.18 | 6.1 | 18.0 | 1.29 |
| 3 | Witcamide 511/Tween 61[3] | 75/25 | 30 0 | 800 | 0.21 | 8.0 | 20.0 | 1.06 |
| 4 | Witcamide 511/Tween 61 | 75/25 | 33.3 | 950 | 0.26 | 11.4 | 20.0 | ---- |
| 5 | Witcamide 511/Span 80/Tween 81[4] | 75/12.5/12.5 | 30.0 | 1100 | ---- | 11.4 | 20.0 | ---- |

*Comparison Example

[1]Witcamide 511 is a partially-esterified N,N-alkanol fatty amide, available from Witco Chemical Company.
[2]Span 80 is sorbitan monooleate, available from ICI Americas, Inc.
[3]Tween 61 is polyoxyethylene (4) sorbitan monostearate, available from ICI Americas, Inc.
[4]Tween 81 is polyoxyethylene (5) sorbitan monooleate, available from ICI Americas, Inc.

0 161 773

These Examples show that conventional surfactant systems give emulsion polymers that are deficient in stability (percent compaction), performance (reduced viscosity and silica settling), and/or particle size/Brookfield viscosity relative to the emulsion polymers of the invention.

Examples 6 and 7

In Examples 6 and 7, copolymers of acrylamide and the methylchloride quaternary salt of N,N-dimethylamino ethyl methacrylate were emulsified. In these Examples, the aqueous phase comprised 16.0 parts of acrylamide, 24.0 parts of the said quaternary salt, 31.967 parts water, and 0.033 part ethylene diamine tetraacetic acid (tetrasodium salt). The aqueous phase was added to a mixture comprising 26.0 parts Kensol 61 and 2.0 parts of the chosen surfactant system. Polymerization was initiated using the free-radical-generating catalyst system of Examples 1 to 5 under nitrogen, and the temperature of the reaction vessel was maintained at 40 °C±5 °C. The results of these polymerizations are shown in Table II, below. In this table, centrifuge test results were obtained as in Examples 1 to 5.

TABLE II

| Example No. | Surfactant System | Surfactant System Composition (Weight %) | % Active Polymer | Brookfield Viscosity (cps) | Centrifuge Test (% Compaction) |
|---|---|---|---|---|---|
| 6* | Witcamide 511/Span 80 | 25/75 | 40.00 | 2350 | 69.5 |
| 7 | Witcamide 511/Tween 61 | 75/25 | 40.00 | 875 | 3.5 |

*Comparison Example

Examples 8 to 11

In these examples, copolymers of acrylamide and the dimethyl sulfate quaternary salt of N,N-dimethylamino methyl methacrylate were emulsified. The aqueous phase comprised 21.5 parts of acrylamide, 3.75 parts of the said quaternary salt, 48.90 parts water and 0.1 part ethylene diamine tetraacetic acid (tetrasodium salt). The aqueous phase was added to a mixture comprising 24.0 parts Kensol 61 and 2.0 parts of the chosen surfactant system. Polymerization was initiated using the free-radical generating catalyst system of Examples 1 to 5 under nitrogen, and the temperature of the reactants was allowed to exotherm to 90 °C. The results are shown in Table III, below. Reduced viscosity, Brookfield viscosity and percent compaction values were obtained as described in Examples 1 to 5. The Drainage/Retention performance values were obtained using the Schopper-Reigler Freeness Test. The paper stock furnish used was a 50:50 percent blend of hardwood and softwood pulps which contained 13 percent (by weight of dry pulp) clay, 2 percent $TiO_2$, 2 percent alum and 1 percent rosin. The polymer dosage in each case was 0.5 lb/ton (1 part in 4480 by weight). The values shown in Table III measure percent increase in drainage and retention over a blank furnish which contained no polymer. These results show that the polymer emulsions made with conventional surfactant systems have poorer stability (percent compaction) and/or performance characteristics (reduced viscosity, drainage/retention) than polymer emulsions made using the invention.

TABLE III

| Example No. | Surfactant System | Surfactant System Composition (Weight %) | % Active Polymer | Brookfield Viscosity (cps) | Mean Diameter of Polymer Particles ($\mu$) | Centrifuge Test (% Compaction) | n0.05 1.0 $N$ NaCl (dl/g) | Drainage/Retention Performance (% Increase Over Blank) | |
|---|---|---|---|---|---|---|---|---|---|
| | | | | | | | | Retention | Drainage |
| 8* | Witcamide 511/Span 80 | 25/75 | 25 | 2350 | 0.27 | 47.6 | 16.7 | 58 | 145 |
| 9* | Witcamide 511/Span 80 | 75/25 | 25 | 1700 | ---- | 13.5 | ---- | -- | --- |
| 10* | Witcamide 511 | 100 | 25 | 200 | 0.21 | 7.1 | 8.8 | 44 | 133 |
| 11 | Witcamide 511/Span 80/Tween 61 | 75/12.5/12.5 | 25 | 1100 | 0.22 | 5.1 | 16.1 | 56 | 144 |

*Comparison Example

0 161 773

## Claims

1. A surfactant system for use in manufacturing water-in-oil emulsions of water-soluble polymers comprising 25 to 85 percent by weight of an oil-soluble alkanolamide, 5 to 35 percent by weight of a polyoxyethylene derivative of a sorbitan ester, and 0 to 50 percent by weight of sorbitan monooleate.

2. A system as claimed in Claim 1 in which the oil-soluble alkanolamide is a partially-esterified N,N-alkanol fatty amide and the polyoxyethylene derivative of a sorbitan ester is polyoxyethylene (4) sorbitan monostearate or polyoxyethylene (5) sorbitan monooleate.

3. A water-in-oil emulsion polymerization process comprising forming a water-in-oil emulsion of an aqueous solution of at least one water-soluble ethylenically unsaturated monomer in an inert hydrophobic liquid organic dispersion medium; and polymerizing the monomer or monomers in the dispersion medium to form a polymer emulsion; characterized by using from 1.1 to 15.0 percent by weight, based on the total emulsion, of a surfactant system as claimed in Claim I.

4. A process as claimed in Claim 3 in which a free-radical-generating catalyst is used to initiate the reaction, and the temperature of the reaction mix is controlled to between 5 and 100 °C.

5. A process as claimed in Claim 3 or 4 in which oil-soluble alkanolamide is a partially esterified N,N-alkanol fatty amide, and the polyoxyethylene derivative of a sorbitan ester is polyoxyethylene (4) sorbitan monostearate.

6. A process as claimed in Claim 3 or 4 in which oil-soluble alkanolamide is a partially esterified N,N-alkanol fatty amide, and the polyoxyethylene derivative of a sorbitan ester is polyoxyethylene (5) sorbitan monooleate.

7. A process as claimed in any one of Claims 3 to 6 in which the surfactant system comprises 1.1 to 5.0 percent by weight of the polymer emulsion.

8. A process as claimed in any one of Claims 3 to 7 in which the polymer has been prepared from acrylamide, methacrylamide, N,N-dimethyl acrylamide, acrylic acid, methacrylic acid, acrylonitrile, vinyl sulfonic acid, styrenesulfonic acid, β-carboxyethyl acrylate, acrylamidomethylpropanesulfonic acid, N,N-dimethylaminoethyl methacrylate, dimethyldiallylammonium chloride, diethyldiallylammonium chloride, methacryloyloxyethyl-trimethylammonium chloride, methacryloyloxyethyl trimethylammonium methosulfate, acryloyloxyethyl-trimethylammonium chloride, acryloyloxyethyl-trimethylammonium methosulfate, methacrylamidopropyl-trimethylammonium chloride, or quaternized derivatives of N,N-dimethylaminoethyl methacrylate, alone or in combination.

## Patentansprüche

1. Ein oberflächenaktives System zur Verwendung bei der Herstellung von Wasser-in-Öl-Emulsionen wasserlöslicher Polymeren, enthaltend 25 bis 85 Gew.-% eines öllöslichen Alkanolamids, 5 bis 35 Gew--% eines Polyoxyethylenderivats eines Sorbitanesters und 0 bis 50 Gew.-% Sorbitanmonooleat.

2. Ein System wie in Anspruch 1 beansprucht, wobei das öllösliche Alkanolamid ein teilverestertes N,N-Alkanolfettamid ist, und das Polyoxyethylenderivat eines Sorbitanesters Polyoxyethylen(4)-sorbitanmonostearat oder Polyoxyethylen(5)sorbitanmonooleat ist.

3. Ein Wasser-in-Öl-Emulsionspolymerisationsverfahren, umfassend das Bilden einer Wasser-in-Öl-Emulsion einer wässerigen Lösung von wenigstens einem wasserlöslichen, ethylenisch ungesättigten Monomer in einem inerten, hydrophoben, flüssigen, organischen Dispersionsmedium; und das Polymerisieren des Monomers oder der Monomeren in dem Dispersionsmedium unter Bildung einer polymeremulsion; gekennzeichnet durch die Verwendung von 0,1 bis 15,0 Gew.-%, bezogen auf die gesamte Emulsion, eines oberflächenaktiven Systems, wie es in Anspruch 1 beansprucht ist.

4. Ein Verfahren wie in Anspruch 3 beansprucht, wobei ein freie Radikale bildender Katalysator zum Zünden der Reaktion verwendet wird, und die Temperatur des Reaktionsgemisches auf eine solche zwischen 5 und 100° C geregelt wird.

5. Ein Verfahren wie in Anspruch 3 oder 4 beansprucht, wobei das öllösliche Alkanolamid ein teilverestertes N,N-Alkanolfettamid ist, und das Polyoxyethylenderivat eines Sorbitanesters Polyoxyethylen(4)sorbitanmonostearat ist.

6. Ein Verfahren wie in Anspruch 3 oder 4 beansprucht, wobei das öllösliche Alkanolamid ein teilverestertes N,N-Alkanolfettamid ist, und das Polyoxyethylenderivat eines Sorbitanesters Polyoxyethylen(5)sorbitanmonooleat ist.

7. Ein Verfahren wie in einem der Ansprüche 3 bis 6 beansprucht, wobei das oberflächenaktive System 1,0 bis 5,0 Gew.-% der Polymeremulsion ausmacht.

8. Ein Verfahren wie in einem der Ansprüche 3 bis 7 beansprucht, wobei das Polymer aus Acrylamid, Methacrylamid, N,N-Dimethylacrylamid, Acrylsäure, Methacrylsäure, Acrylnitril, Vinylsulfonsäure, Styrolsulfonsäure, β-Carboxyethylacrylat, Acrylamidomethylpropansulfonsäure, N,N-Dimethylamino-ethylmethacrylat, Dimethyldiallylammoniumchlorid, Diethyldiallylammoniumchlorid, Methacryloyl-oxyethyl-trimethylammoniumchlorid, Methacryloyloxyethyltrimethylammoniummethosulfat, Acryloyl-oxyethyl-trimethylammoniumchlorid, Acryloyloxyethyl-trimethylammoniummethosulfat, Methacryl-amidopropyl-trimethylammoniumchlorid oder quaternisierten Derivaten von N,N-Dimethylaminoethylmethacrylat, allein oder in Kombination, hergestellt worden ist.

**Revendications**

1. Système tensio-actif pour utilisation dars la fabrication d'émulsion eau-dans-huile de polymères hydrosolubles, comprenant 25 à 85% en poids d'un alcanolamide soluble dans de l'huile, de 5 à 35% enpoids d'un dérivé polyoxyéthylénique d'un ester de sorbitanne et de O à 50% en poids de mono-oléate de sorbitanne.

2. Système selon la revendication 1, dans lequel l'alcanol-amide oléosoluble est un amide gras de N,N-alcanol partiellement estérifié et le dérivé polyoxyéthylénique d'un ester de sorbitanne est le monostéarate de polyoxyéthylène (4)-sorbitanne ou le monooléate de polyoxyéthylène(5)-sorbitanne.

3. Procédé de polymérisation en émulsion eau-dans-huile, qui consiste à former une émulsion eaudans-huile d'une solution aqueuse d'au moins un monomère hydrosoluble à insaturation éthylénique dans un milieu de dispersion organique liquide hydrophobe inerte; et à polymériser le ou les monomère(s) dans le milieu de dispersion pour former une émulsion de polymère; caractérisé en ce qu'on utilise de 0,1 à 15,0% en poids, par rapport à l'émulsion totale d'un système tensio-actif tel que défini dans la revendication 1.

4. Procédé selon la revendication 3, dans lequel on utilise un catalyseur radicalaire pour amorcer la réaction et on règle la température du mélange de réaction à une valeur entre 5 et 100°C.

5. Procédé selon la revendication 3 ou 4, dans lequel l'alcanol-amide oléo-soluble est un amide gras de N,N-alcanol partiellement estérifié et le dérivé polyoxyéthylénique d'un ester de sorbitanne est le monostéarate de polyoxyéthylène(4)-sorbitanne.

6. Procédé selon la revendication 3 ou 4, dans lequel l'alcanol-amide oléosoluble est un amide gras de N,N-alcanol partiellement estérifié et le dérivé polyoxyéthylénique d'un ester de sorbitanne est le monooléate de polyoxyéthylène(5) d'un sorbitanne.

7. Procédé selon l'une quelconque des revendications 3 à 6, dans lequel le système tensio-actif constitue de 1,0 à 5,0% en poids de l'émulsion de polymère.

8. Procédé selon l'une quelconque des revendications 3 à 7, dans lequel le polymère a été préparé à partir d'acrylamide, deméthacrylamide, de N,N-diméthylacrylamide, d'acide acrylique, d'acide méth-acrylique, d'acrylonitrile, d'acide vinylsulfonique, d'acide styrènesulfonique, d'acrylate de bêta-carboxy-éthyle, d'acide acrylamidométhylpropanesulfonique, de méthacrylate de N,N-diméthylaminoéthyle, de chlorure de diméthyldiallylammonium, de chlorure de diéthyldiallylammonium, de chlorure de méth-acryloyloxyéthyl-triméthylammonium, de méthosulfate de méthacryloyloxyéthyltriméthylammonium, de chlorure d'acryloyloxyéthyl-triméthylammonium, de méthosulfate d'acryloyloxyéthyltriméthylammonium, de chlorure de méthacrylamidopropyltriméthylammonium ou de dérivés quaternisés de méthacrylate de N,N-diméthylaminoéthyle isolément ou en combinaison.